# EUROPEAN PATENT APPLICATION

(11) **EP 4 503 790 A1**
(43) Date of publication of application: **05.02.2025**
(21) Application number: 22933978.3
(22) Date of filing: 28.03.2022
(51) Int. Cl.: H04W 72/02

(54) **INFORMATION TRANSMISSION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/083507
(87) International publication number: WO 2023/184121

(57) **Abstract**

Embodiments of the present disclosure relate to an information transmission method and apparatus, a communication device, and a storage medium. A base station sends a cell handover command to a first type of user equipment (UE), wherein the cell handover command carries bandwidth part (BWP) configuration information indicating the BWP of a target cell, and the BWP of the target cell is determined on the basis of the type of the first type of UE.

## Description

### TECHNICAL FIELD

The present disclosure relates to, but is not limited to, a field of wireless communication technology, in particular to a method and an apparatus for information transmission, a communication device and a storage medium.

### BACKGROUND

In current third generation partnership project (3GPP) standardization, a new terminal type called a reduced capability user equipment (UE) is proposed, which is also referred to as a NR-Lite or Redcap terminal. Similar to an internet of things device in a long term evolution (LTE) technology, a 5th generation-based (5G-based) NR-Lite terminal usually needs to satisfy the following requirements:
- low cost, low complexity;
- coverage enhancement to some extent;
- power saving;
- some terminals have 1 Rx (one receive antenna) and some terminals have 2 Rx (two receive antennas).

### SUMMARY

In view of this, embodiments of the present disclosure provide a method and an apparatus for information transmission, a communication device and a storage medium.

According to a first aspect of embodiments of the present disclosure, a method for information transmission is provided. The method is performed by a base station, including:
sending a cell handover command to a first-type user equipment (UE), in which the cell handover command carries bandwidth part (BWP) configuration information indicating a BWP of a target cell, and the BWP of the target cell is determined based on a type of the first-type UE.

In an embodiment, the BWP corresponding to the first-type UE indicated by the BWP configuration information includes at least one of:
a first active initial downlink (DL) BWP;
a first active initial uplink (UL) BWP;
a first initial DL BWP; or
a first initial UL BWP.

In an embodiment,
the first active initial DL BWP does not include a synchronization signal block (SSB);
   or,
the first active initial DL BWP includes an SSB.

In an embodiment, in response to determining that the first-type UE has a predetermined capability, the first active initial DL BWP indicated by the BWP configuration information includes a non-cell-defining SSB (NCD-SSB).

In an embodiment,
the first initial DL BWP does not include an SSB;
   or,
the first initial DL BWP includes an SSB.

In an embodiment, in response to determining that the first-type UE has the predetermined capability, the first initial DL BWP indicated by the BWP configuration information includes an NCD-SSB.

In an embodiment, the method further includes at least one of:
in response to the target cell being configured with a second initial DL BWP for the first-type UE, determining the second initial DL BWP as the first initial DL BWP;
in response to the target cell being configured with a third initial DL BWP for a second-type UE, and a bandwidth of the third initial DL BWP being less than or equal to a bandwidth of a DL BWP supported by the first-type UE, determining the third initial DL BWP as the first initial DL BWP;
in response to the target cell being configured with the third initial DL BWP for the second-type UE, and the bandwidth of the third initial DL BWP being greater than the bandwidth of the DL BWP supported by the first-type UE, determining a fourth initial DL BWP configured in a master information block (MIB) corresponding to the target cell as the first initial DL BWP; or
in response to the target cell being not configured with the third initial DL BWP for the second-type UE, determining a fifth initial DL BWP configured in the MIB corresponding to the target cell as the first initial DL BWP.

In an embodiment, the method further includes at least one of:
in response to the target cell being configured with a second initial UL BWP for the first-type UE, determining the second initial UL BWP as the first initial UL BWP; or
in response to the target cell being configured with a third initial UL BWP for a second-type UE, and a bandwidth of the third initial UL BWP being less than or equal to a bandwidth of a UL BWP supported by the first-type UE, determining the third initial UL BWP as the first initial UL BWP.

According to a second aspect of embodiments of the disclosure, a method for information transmission is provided. The method is performed by a first-type UE, including:
receiving a cell handover command from a base station, in which the cell handover command carries BWP configuration information indicating a BWP corresponding to the first-type UE in a target cell, and the BWP of the target cell is determined by the base station based on a type of the first-type UE.

In an embodiment, the BWP corresponding to the first type of UE includes at least one of:
a first active initial DL BWP;
a first active initial UL BWP;
a first initial DL BWP; or
a first initial UL BWP.

In an embodiment, the first active initial DL BWP does not include an SSB;
or,
the first active initial DL BWP includes an SSB.

In an embodiment, the method further includes:
in response to the first active initial DL BWP not including an SSB, performing synchronization and/or wireless signal measurement by using an initial DL BWP including the SSB in the target cell.

In an embodiment, the first initial DL BWP does not include an SSB;
or,
the first initial DL BWP includes an SSB.

In an embodiment, the method further includes:
in response to the first initial DL BWP not including the SSB, performing synchronization and/or wireless signal measurement by using an initial DL BWP including an SSB in the target cell.

In an embodiment, the method further includes:
sending indication information indicating whether the first-type UE has a predetermined capability to the base station, in which the predetermined capability is used for the base station to determine whether to indicate to the first-type UE a first active initial DL BWP including an NCD-SSB and/or a first initial DL BWP including an NCD-SSB.

According to a third aspect of embodiments of the disclosure, an apparatus for information transmission is provided, and includes:
a first transceiving module, configured to send a handover command to a first-type user equipment (UE), in which the cell handover command carries BWP configuration information indicating a BWP of a target cell, and the BWP of the target cell is determined based on a type of the first-type UE.

In an embodiment, the BWP corresponding to the first-type UE indicated by the BWP configuration information includes at least one of:
a first active initial DL BWP;
a first active initial UL BWP;
a first initial DL BWP; or
a first initial UL BWP.

In an embodiment, the first active initial DL BWP does not include an SSB;
or,
the first active initial DL BWP includes an SSB.

In an embodiment, in response to determining that the first-type UE has a predetermined capability, the first active initial DL BWP indicated by the BWP configuration information includes an NCD-SSB.

In an embodiment, the first initial DL BWP does not include an SSB;
or,
the first initial DL BWP includes an SSB.

In an embodiment, in response to determining that the first-type UE has a predetermined capability, the first initial DL BWP indicated by the BWP configuration information includes an NCD-SSB.

In an embodiment, the apparatus further includes a first processing module, in which the first processing module is configured to perform at least one of:
in response to the target cell being configured with a second initial DL BWP for the first-type UE, determining the second initial DL BWP as the first initial DL BWP;
in response to the target cell being configured with a third initial DL BWP for a second-type UE, and a bandwidth of the third initial DL BWP being less than or equal to a bandwidth of a DL BWP supported by the first-type UE, determining the third initial DL BWP as the first initial DL BWP;
in response to the target cell being configured with the third initial DL BWP for the second-type UE, and the bandwidth of the third initial DL BWP being greater than the bandwidth of the DL BWP supported by the first-type UE, determining a fourth initial DL BWP configured in an MIB corresponding to the target cell as the first initial DL BWP; or
in response to the target cell being not configured with the third initial DL BWP for the second-type UE, determining a fifth initial DL BWP configured in the MIB corresponding to the target cell as the first initial DL BWP.

In an embodiment, the apparatus further includes a first processing module, in which the first processing module is configured to perform at least one of:
in response to the target cell being configured with a second initial UL BWP for the first-type UE, determining the second initial UL BWP as the first initial UL BWP; or
in response to the target cell being configured with a third initial UL BWP for a second-type UE, and a bandwidth of the third initial UL BWP being less than or equal to a bandwidth of a UL BWP supported by the first-type UE, determining the third initial UL BWP as the first initial UL BWP.

According to a fourth aspect of embodiments of the disclosure, an apparatus for information transmission is provided, and includes:
a second transceiving module, configured to receive a cell handover command from a base station, in which the cell handover command carries BWP configuration information indicating a BWP corresponding to a first-type user equipment (UE) in a target cell, and the BWP of the target cell is determined by the base station based on a type of the first-type UE.

In an embodiment, the BWP corresponding to the first-type UE includes at least one of:
a first active initial DL BWP;
a first active initial UL BWP;
a first initial DL BWP; or
a first initial UL BWP.

In an embodiment, the first active initial DL BWP does not include an SSB;
or,
the first active initial DL BWP includes an SSB.

In an embodiment, the apparatus further includes a second processing module, in which the second processing module is configured to:
in response to the first active initial DL BWP not including an SSB, perform synchronization and/or wireless signal measurement by using an initial DL BWP including an SSB in the target cell.

In an embodiment, the first initial DL BWP does not include an SSB;
or,
the first initial DL BWP includes an SSB.

In an embodiment, the apparatus further includes a second processing module, in which the second processing module is configured to:
in response to the first initial DL BWP not including an SSB, perform synchronization and/or wireless signal measurement by using an initial DL BWP including an SSB in the target cell.

In an embodiment, the second transceiving module is further configured to:
send indication information indicating whether the first-type UE has a predetermined capability to the base station, in which the predetermined capability is used for the base station to determine whether to indicate to the first-type UE a first active initial DL BWP including an NCD-SSB and/or a first initial DL BWP including an NCD-SSB.

According to a fifth aspect of embodiments of the disclosure, a communication device is provided, including a processor, a memory and an executable program stored in the memory and capable of being executed by the processor, in which when the executable program is executed by the processor, steps of the method for information transmission according to the first aspect or the second aspect are performed.

According to a sixth aspect of embodiments of the disclosure, a storage medium with an executable program stored thereon is provided, in which when the executable program is executed by a processor, steps of the method for information transmission according to the first aspect or the second aspect are performed.

In embodiments of the disclosure, the method and the apparatus for information transmission, the communication device and the storage medium are provided. The method for information transmission includes that the base station sends the cell handover command to the first-type UE, and the cell handover command carries the BWP configuration information indicating the BWP of the target cell, and the BWP of the target cell is determined based on the type of the first-type UE. In this way, the BWP of the target cell being handover to is configured for the UE based on the type of the UE, thus, a situation that a configured BWP cannot be supported by the UE is reduced, a cell handover success rate is improved, and a communication reliability is improved.

It should be understood that the above general descriptions and following detailed descriptions are only illustrative and descriptive, and may not be a limitation in embodiments of the disclosure.

### BRIEF DESCRIPTION OF THE DRAWINGS

The drawings herein are incorporated into the specification and constitute a part of the specification, show embodiments in conformity with embodiments of the present disclosure, and explain the principle in embodiments of the present disclosure together with the specification.
FIG. 1 is a schematic diagram illustrating a wireless communication system according to an embodiment.
FIG. 2 is a flowchart illustrating a method for information transmission according to an embodiment.
FIG. 3 is a flowchart illustrating another method for information transmission according to an embodiment.
FIG. 4 is a flowchart illustrating another method for information transmission according to an embodiment.
FIG. 5 is a flowchart illustrating another method for information transmission according to an embodiment.
FIG. 6 is a flowchart illustrating another method for information transmission according to an embodiment.
FIG. 7 is a flowchart illustrating another method for information transmission according to an embodiment.
FIG. 8 is a flowchart illustrating another method for information transmission according to an embodiment.
FIG. 9 is a block diagram of an apparatus for information transmission according to an embodiment.
FIG. 10 is a block diagram of another apparatus for information transmission according to an embodiment.
FIG. 11 is a block diagram of a device configured for information transmission according to an embodiment.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all the implementations consistent with the present disclosure. Rather, they are merely examples of the apparatus and method consistent with some aspects of the present disclosure as detailed in the appended claims.

The terms described in the present disclosure are only for the purpose of describing specific embodiments and are not intended to limit the embodiments of the present disclosure. The singular forms "a", "the" and "said" used in the embodiments of the present disclosure and the attached claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in the embodiments of the disclosure to describe various information, such information shall not be limited to these terms. These terms are only configured to distinguish the same type of information. For example, subject to the scope of this present disclosure, first information may also be referred to as second information, and similarly, and second information may also be referred to as first information. It depends on the context. For example, the word "if' as used herein may be interpreted as "upon" or "when" or "in response to determining".

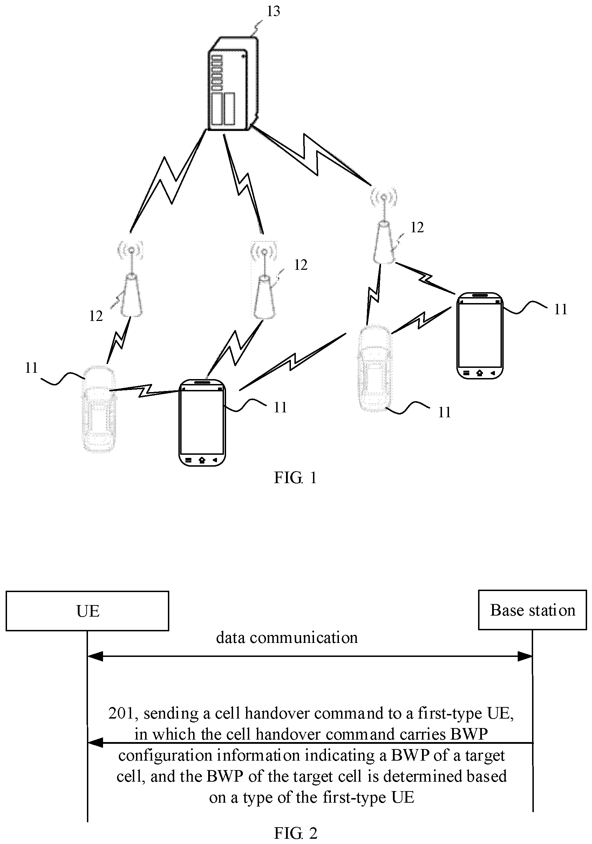

FIG. 1 is a schematic diagram illustrating a wireless communication system in an embodiment of the present disclosure. As illustrated in FIG. 1, the wireless communication system is a communication system based on a cellular mobile communication technology. The wireless communication system may include several terminals 11 and several base stations 12.

The terminal 11 may refer to a device that provides voice and/or data connectivity for a user. The terminal 11 may communicate with one or more core networks through a radio access network (RAN). The terminal 11 may be an internet of things terminal, for example, a sensor device, a mobile phone (or referred to as a cellular phone), and a computer having an internet of things terminal, which may be, for example, a fixed, portable, compact, handheld, computer built-in or vehicle-mounted apparatus, such as, a station (STA), a subscriber unit, a subscriber station, a mobile station, a mobile, a remote station, an access point, a remote terminal, an access terminal, a user terminal, a user agent, a user device or a user equipment(UE). Or, the terminal 11 may be a device of an unmanned aerial vehicle, or, the terminal 11 may be a vehicle-mounted device, which may be, for example, a vehicle computer with a wireless communication function, or a wireless communication device externally connected to a vehicle computer. Or, the terminal 11 may be a roadside device, which may be, for example, a street lamp with the wireless communication function, a signal light or other roadside devices, etc.

A base station 12 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Or, the wireless communication system may be a next generation system of the 5G system. An access network in the 5G system may be referred to as a new generation-radio access network (NG-RAN), or, an MTC system.

The base station 12 may be an evolved Node B (eNB) adopted in the 4G system. Or, the base station 12 may be a base station (gNB) with a centralized distributed architecture in the 5G system. When the base station 12 adopts the centralized distributed architecture, the base station 12 generally includes a central unit (CU) and at least two distributed units (DUs). The CU is configured with protocol stacks at a packet data convergence protocol (PDCP) layer, a radio link control (RLC) layer and a media access control (MAC) layer. The DU is configured with a protocol stack at a physical (PHY) layer. The specific implementation of the base station 12 is not limited in embodiments of the disclosure.

The base station 12 may establish a wireless connection with the terminal 11 through a wireless air interface. In different implementations, the wireless air interface is a wireless air interface based on a 4G standard; or, the wireless air interface is a wireless air interface based on a 5G standard. For example, the wireless air interface is a new radio; or, the wireless air interface may be a wireless air interface based on a next generation mobile communication network technology standard of the 5G.

In some embodiments, the terminals 11 can establish an E2E (end to end) connection with each other, for example, vehicle to vehicle (V2V) communication, vehicle to infrastructure (V2I) communication, vehicle to pedestrian (V2P) communication and the like scenes in vehicle to everything (V2X) communication.

In some embodiment, the wireless communication system may further include a network management device 13.

Several base stations 12 are connected with the network management device 13 respectively. The network management device 13 may be a core network device in the wireless communication system. For example, the network management device 13 may be a mobility management entity (MME) in an evolved packet core (EPC). Or, the network management device may be other core network devices, for example, a serving gateway (SGW), a public data network gateway (PGW), a policy and charging rules function (PCRF) or a home subscriber server (HSS), and the like. The implementation of the network management device 13 is not limited in embodiments of the present disclosure.

An execution subject involved in embodiments of the present disclosure includes, but is not limited to, a mobile phone terminal in a cellular mobile communication system, and a network side device, an access network device such as a base station, a core network, and the like.

In the related art, an initial downlink (DL) bandwidth part (BWP), such as, a RedCap-specific initial DL BWP configuration, may be separately configured for a Redcap UE in a system information block 1 (SIB 1). The initial DL BWP is used for reception of a random access response (RAR); or may be used for paging and the like.

For a frequency range 1 (FR1), a specific initial DLBWP may be configured without including a cell-defining synchronization signal block (CD-SSB) and CORESET#0. Within the FR1 range, if the specific initial DL BWP is configured for random access while not for paging in idle/inactive mode, the Redcap UE does not expect that the specific initial DL BWP include SSB/CORESET#0/SIB. In this case, an access network (RANI) assumes the Redcap UE performing random access in the specific initial DL BWP while does not need to monitor paging in a BWP including CORESET#0.

For a FR2, the specific initial DL BWP may be configured without including the CD-SSB. Within the FR2 range, if the specific initial DL BWP is configured for random access while not for paging in idle/inactive mode, the Redcap UE does not expect that the specific initial DL BWP includes SSB /CORESET#0/SIB. In this case, the RANI assumes the Redcap UE performing random access in the specific initial DL BWP while does not need to monitor paging in the BWP including CORESET#0.

An initial uplink (UL) BWP, such as, a RedCap-specific initial UL BWP configuration, is also separately configured in the SIB1 in an uplink direction. The initial UL BWP is configured for random access.

However, when the Redcap UE performs a cell handover, an initial BWP used by the Redcap UE is sent by a target base station to the UE in a handover command. In the related art, for a handover procedure, how to configure an initial DL BWP is not defined. In addition, for the Redcap UE, if an initial BWP used by an ordinary UE is directly configured to the Redcap UE, a situation that the initial BWP used by the ordinary UE cannot be supported by the Redcap UE may occur. Due to a bandwidth of the initial BWP used by the ordinary UE may be outside a bandwidth range that can be supported by the Redcap UE, the Redcap UE may not receive a corresponding configuration of the initial BWP.

Therefore, how to configure a BWP in the handover procedure of the Redcap UE to satisfy a requirement of the Redcap UE on the BWP and improve a communication reliability of the Redcap UE is an urgent problem to be solved.

As shown in FIG. 2, a method for information transmission is provided in an embodiment. The method may be performed by a base station in a cellular mobile communication system, and includes the following step.

At step 201, a cell handover command is sent to a first-type UE, in which the cell handover command carries BWP configuration information indicating a BWP of a target cell, and the BWP of the target cell is determined based on a type of the first-type UE.

In a procedure that the UE is handed over from a serving cell to the target cell, the base station to which the serving cell belongs may send a handover command to the UE to instruct the UE to hand over to the target cell. The serving cell and the target cell may be cells generated by a same base station, or cells generated by different base stations. The base station to which the serving cell belongs may perform a resource application and allocation to a base station to which the target cell belongs.

The first-type UE may be a UE in an RRC connected state. A signal receiving capability of the first-type UE is lower than a signal receiving capability of a second-type UE. That is, the first-type UE may have a lower signal receiving capability relative to the second-type UE. For example, the first-type UE has a smaller number of receive antennas relative to the second-type UE. The first-type UE has a smaller BWP support capability. For example, a bandwidth of a BWP supported by the first-type UE is 20M in an FR1, and 100M in an FR2. A bandwidth of a BWP supported by the second-type UE is greater than the bandwidth of the BWP supported by the first-type UE.

For example, the first-type UE may be a Redcap-type UE introduced in 3GPP Release 17 (R17). The first-type UE may also be an enhanced Redcap-type UE introduced in a subsequent 3GPP Release version. For example, the first-type UE may be a Redcap-type UE. The second-type UE may be an enhanced mobile broadband type (eMBB-type) UE.

The BWP of the target cell indicated by the BWP configuration information may be determined by the base station to which the serving cell belongs, or may be determined by the base station to which the target cell belongs. The BWP indicated by the BWP configuration information may include: an initial BWP for accessing the target cell, and/or a first active BWP for service data transmission, and the like.

Here, the BWP indicated by the BWP configuration information may be determined by the base station to which the target cell belongs. The base station may determine a BWP suitable for a type of the UE based on the type of the UE. For example, when a UE performing the handover is the first-type UE, a BWP with a narrower bandwidth may be configured for the first-type UE, so that the configured BWP may conform to a supporting capability of the first-type UE. When the UE performing the handover is the second-type UE, a BWP with a wider bandwidth may be configured for the second-type UE.

In an embodiment, the UE may report its own UE type. When a handover request is sent to the base station to which the target cell belongs, the base station to which the serving cell belongs may carry the type of the UE in the handover request. The base station to which the target cell belongs may configure a BWP for the UE based on the type of the UE. For example, the UE may report its own UE type to the base station to which the serving cell belongs, and the base station to which the serving cell belongs may indicate the type of the UE to the base station to which the target cell belongs in the handover procedure.

After the BWP configured for the first-type UE is determined, the base station to which the target cell belongs may send the BWP to the base station to which the serving cell of the first-type UE belongs. Then the base station to which the serving cell belongs sends the BWP to the UE.

After the BWP configuration information is received, the UE may perform data transmission, for example, reception of a random access response, service data transmission, and the like, based on the BWP of the target cell indicated by the BWP configuration information. Since the BWP is configured based on the type of the UE, the UE may support the BWP.

In this way, the BWP of the target cell being handed over to is configured for the UE based on the type of the UE, thus, a situation that a configured BWP cannot be supported by the UE is reduced, a cell handover success rate is improved, and a communication reliability is improved.

In an embodiment,
the BWP corresponding to the first-type UE indicated by the BWP configuration information includes at least one of:
a first active initial DL BWP;
a first active initial UL BWP;
a first initial DL BWP; or
a first initial UL BWP.

The first active initial DL BWP may be an active DL BWP initially used when the first-type UE, such as the Redcap UE, performs the service data transmission in the target cell. The bandwidth of the BWP that can be supported by the second-type UE, such as an eMBB UE, is greater than the bandwidth of the BWP that can be supported by the first-type UE. Therefore, a bandwidth of the first active initial DL BWP configured by the base station for the first-type UE is less than or equal to a bandwidth of a first active initial DL BWP configured for the second-type UE, so that the bandwidth of the first active initial DL BWP configured for the first-type UE can conform a support capability of the first-type UE.

The first active initial UL BWP may be an active UL BWP initially used when the first-type UE, such as the Redcap UE, performs the service data transmission in the target cell. The bandwidth of the BWP that can be supported by the second-type UE, such as an eMBB UE, is greater than the bandwidth of the BWP that can be supported by the first-type UE. Therefore, a bandwidth of the first active initial UL BWP configured by the base station for the first-type UE is less than or equal to a bandwidth of a first active initial UL BWP configured for the second-type UE, so that the bandwidth of the first active initial UL BWP configured for the first-type UE can conform the support capability of the first-type UE.

The first initial DL BWP may be a BWP that the first-type UE performs random access in the target cell. For example, the first initial DL BWP may be a BWP that the first-type UE receives an RAR in the target cell, or the first initial DL BWP may also be a BWP that the first-type UE receives paging in the target cell. For example, the first initial DL BWP may be initialDownlinkBWP-RedCap configured by using DownlinkConfigCommon. The base station may configure the bandwidth of the first initial DL BWP to be less than or equal to a bandwidth of an initial DL BWP configured for the second-type UE, so that the bandwidth of the first initial DL BWP can conform to the support capability of the first-type UE.

For example, the first initial DL BWP may be a RedCap-specific initial DL BWP.

The first initial UL BWP may be a BWP that the first-type UE performs random access in the target cell. The base station may configure a bandwidth of the first initial UL BWP to be less than or equal to a bandwidth of an initial DL BWP configured for the second-type UE, so that the bandwidth of the first initial UL BWP can conform to the support capability of the first-type UE.

For example, the first initial UL BWP may be a RedCap-specific initial UL BWP.

In this way, the BWP of the target cell being handed over to is configured for the UE based on the type of the UE, thus, a situation that a configured BWP cannot be supported by the UE is reduced, a cell handover success rate is improved, and a communication reliability is improved.

In an embodiment,
the first active initial DL BWP does not include an SSB;
   or,
the first active initial DL BWP includes an SSB.

The first active initial DL BWP configured for the first-type UE may not include an SSB. Here, the SSB may include a cell-defining SSB (CD-SSB) or an non cell-defining SSB (NCD-SSB). The CD-SSB includes an SIB1, i.e., remaining minimum system information (RMSI), which may be used to indicate one cell. The CD-SSB may be used for synchronization or signal measurement. The NCD-SSB cannot be used to determine a cell, and the NCD-SSB may be used for synchronization or signal measurement.

In an embodiment, in response to the first active initial DL BWP not including the SSB, the first-type UE performs synchronization and/or wireless signal measurement by using an initial DL BWP including an SSB in the target cell.

The first active initial DL BWP configured for the first-type UE does not include the SSB, and the first-type UE may use the initial DL BWP including the SSB to perform the synchronization. For example, the first-type UE may obtain, by encoding an MIB, an initial DL BWP configured by the MIB to perform the synchronization and/or wireless signal measurement in the target cell. For example, the synchronization and/or measurement is performed by using a specific initial DL BWP configured by the MIB. Or, the first-type UE may perform the synchronization and/or wireless signal measurement by using an initial DL BWP used by the second-type UE.

The first active initial DL BWP configured for the first-type UE may include the SSB. Here, the SSB may include a CD-SSB or an NCD-SSB. The first-type UE may complete synchronization and/or wireless signal measurement based on the SSB in the first active DL BWP.

The first active initial DL BWP including the SSB may include: the first active initial DL BWP including a CD-SSB, or the first active initial DL BWP including an NCD-SSB.

If the first active initial DL BWP does not include the SSB, the synchronization and measurement in the handover procedure may be accelerated, and performance is optimized.

In an embodiment, in response to determining that the first-type UE has a predetermined capability, the first active initial DL BWP indicated by the BWP configuration information includes an NCD-SSB.

The base station may configure the first active initial DL BWP including the NCD-SSB for the first-type UE based on the predetermined capability of the first-type UE.

In an embodiment, the predetermined capability may be obtained by the base station (a target base station) to which the target cell belongs from the base station (an original base station) to which the serving cell belongs. For example, the predetermined capability of the first-type UE may be carried in the handover request sent by the original base station to the target base station. The predetermined capability may be obtained by the base station (the target base station) to which the target cell belongs from a core network. The first-type UE may send its own predetermined capability to the original base station and/or the core network when connected to the original base station.

The predetermined capability may include a requirement of the first-type UE on the first active initial DL BWP. For example, the predetermined capability may be that the first-type UE supports a feature group (FG) 6-1, but expects that a BWP includes an NCD-SSB and does not include CORESET#0/SIB, and the like.

In an embodiment,
the first initial DL BWP does not include an SSB;
   or,
the first initial DL BWP includes an SSB.

The first initial DL BWP may not include the SSB. Here, the SSB may include a CD-SSB or an NCD-SSB. The CD-SSB includes an SIB1, i.e., RMSI, which may be used to indicate one cell. The CD-SSB may be used for synchronization or for signal measurement. The NCD-SSB cannot be used to determine a cell, and the NCD-SSB may be used for synchronization or signal measurement.

In an embodiment, in response to the first initial DL BWP not including the SSB, the first-type UE performs the synchronization and/or wireless signal measurement with the target cell by using an initial DL BWP including the SSB in the target cell.

In this case, an additional transceiver conversion duration is required, so that a delay of synchronization and random access in the handover procedure is increased. The first initial DL BWP does not include the SSB, so that the synchronization and measurement in the handover procedure can be accelerated, and performance is optimized.

The first initial DL BWP does not include the SSB, and the first-type UE may use the initial DL BWP including the SSB to perform the synchronization. For example, the first-type UE may obtain, by encoding an MIB, an initial DL BWP configured by the MIB to perform the synchronization in the target cell. For example, the synchronization is performed by using a specific initial DL BWP configured by the MIB, or the first-type UE may perform the synchronization and/or wireless signal measurement by using an initial DL BWP used by the second-type UE.

The first initial DL BWP may include the SSB. Here, the SSB may include a CD-SSB or an NCD-SSB. The first-type UE may complete the synchronization and/or wireless signal measurement based on the SSB included in the first initial DL BWP.

The first initial DL BWP including the SSB may include: the first initial DL BWP including the CD-SSB, or the first initial DL BWP including the NCD-SSB.

In an embodiment, in response to determining that the first-type UE has a predetermined capability, the first initial DL BWP indicated by the BWP configuration information includes an NCD-SSB.

The base station may configure the first initial DL BWP including the NCD-SSB for the first-type UE based on the predetermined capability of the first-type UE.

In an embodiment, the predetermined capability may be obtained by the base station (a target base station) to which the target cell belongs from the base station (an original base station) to which the serving cell belongs. For example, the predetermined capability of the first-type UE may be carried in a handover request sent by the original base station to the target base station. The predetermined capability may be obtained by the base station (the target base station) to which the target cell belongs from a core network. The first-type UE may send its own predetermined capability to the original base station and/or the core network when connected to the original base station.

The predetermined capability may include a requirement of the first-type UE on the first initial DL BWP. For example, the predetermined capability may be that the first-type UE supports a FG 6-1, but expects that a BWP includes an NCD-SSB and does not include CORESET#0/SIB, and the like.

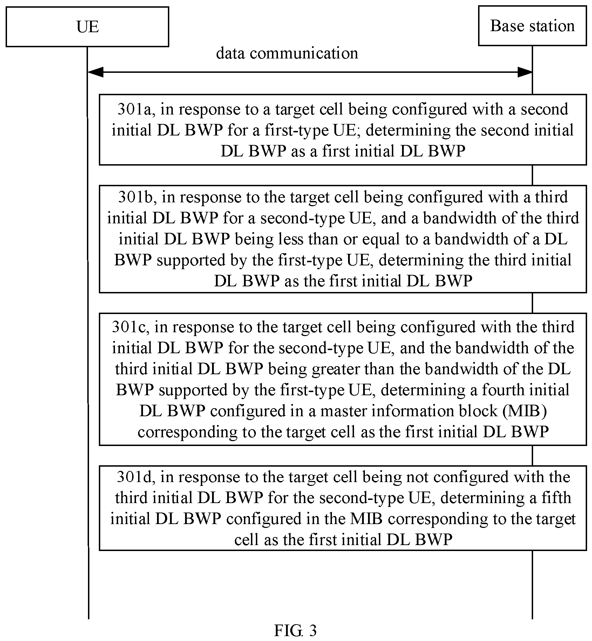

As shown in FIG. 3, a method for information transmission is provided in an embodiment. The method may be performed by a base station in a cellular mobile communication system, and includes at least one of the following steps.

At step 301a, in response to a target cell being configured with a second initial DL BWP for a first-type UE, the second initial DL BWP is determined as a first initial DL BWP.

At step 301b, in response to the target cell being configured with a third initial DL BWP for a second-type UE, and a bandwidth of the third initial DL BWP being less than or equal to a bandwidth of a DL BWP supported by the first-type UE, the third initial DL BWP is determined as the first initial DL BWP.

At step 301c, in response to the target cell being configured with the third initial DL BWP for the second-type UE, and the bandwidth of the third initial DL BWP being greater than the bandwidth of the DL BWP supported by the first-type UE, a fourth initial DL BWP configured in an MIB corresponding to the target cell is determined as the first initial DL BWP.

At step 301d, in response to the target cell being not configured with a third initial DL BWP for the second-type UE, a fifth initial DL BWP configured in the MIB corresponding to the target cell is determined as the first initial DL BWP.

The step 301a, the step 301b, the step 301c, and/or the step 301d may be implemented separately, or may be implemented in combination with the step 201.

If a specific second initial DL BWP is configured for the first-type UE in the target cell, for example, a specific initial DL BWP (i. e., a RedCap-specific initial DL BWP) is configured for a Redcap UE, a network device directly determines the second initial DL BWP as the first initial DL BWP, and indicates the initial DL BWP to the first-type UE through BWP configuration information. The first-type UE will use the initial BWP to perform random access during a handover. Here, the specific initial DL BWP may be a BWP configured by the base station separately for the Redcap UE in the SIB1. The specific initial DL BWP may be used for initial random access of the UE, or may be used for a cell handover of the UE. Herein, the network device may include an access network device and/or a core network device.

If no specific second initial DL BWP is configured for the first-type UE in the target cell and a third initial DL BWP is configured for the second-type UE, such as an eMBB UE, and the bandwidth of the third initial DL BWP is less than or equal to the bandwidth (which is 20M in an FR1 and 100M in an FR2) supported by the first-type UE, such as the Redcap UE, the network device directly determines the third initial DL BWP as the first initial DL BWP, and indicates the initial DL BWP to the first-type UE through the BWP configuration information during a cell handover. The first-type UE may use the third initial DL BWP to perform random access during the handover.

If no specific second initial DL BWP is configured for the first-type UE in the target cell, if no specific second initial DL BWP is configured for the first-type UE in the target cell and a third initial DL BWP is configured for the second-type UE, such as the eMBB UE, and the bandwidth of the third initial DL BWP is greater than the bandwidth (which is 20M in the FR1 and 100M in the FR2) supported by the first-type UE, such as the Redcap UE, the network device directly determines a fourth initial DL BWP configured by the MIB as the first initial DL BWP, and indicates the initial DL BWP to the first-type UE through the BWP configuration information during the cell handover. The first-type UE may perform random access by using the fourth initial DL BWP when the handover is performed, or may obtain, by decoding the MIB, the fourth initial DL BWP configured by the MIB to perform the random access in the target cell.

If, in the target cell, the third initial DL BWP is configured for the second-type UE, such as the eMBB UE, and no specific initial DL BWP is configured for the first-type UE, the network device directly determines a fourth initial DL BWP configured by the MIB as the first initial DL BWP, and indicates the initial DL BWP to the first-type UE through the BWP configuration information during the cell handover. The first-type UE may perform the random access by using the initial DL BWP when the handover is performed, or may obtain, by decoding the MIB, the fifth initial DL BWP configured by the MIB to perform the random access in the target cell.

In an embodiment, a protocol defines that it is necessary to ensure that access is performed as soon as possible in a handover procedure, then an SSB may be configured in the first initial DL BWP. In this case, an initial DL BWP configured for a normal user or an initial DL BWP configured by the MIB may be configured for a terminal to access when a handover is performed, due to these initial BWPs usually include a CD-SSB.

In an embodiment, in this case, regardless of whether the specific second initial DL BWP is configured for the first-type UE in the target cell, and if the third initial DL BWP is configured for the second-type UE, such as the eMBB UE, in the target cell, and the bandwidth of the third initial DL BWP is less than or equal to the bandwidth (which is 20M in the FR1 and 100M in the FR2) supported by the first-type UE, such as the Redcap UE, the network device directly determines the third initial DL BWP as the first initial DL BWP, and it is indicated to the first-type UE through the BWP configuration information during the cell handover. The first-type UE may perform the random access by using the third initial DL BWP when the handover is performed.

In this case, regardless of whether the specific second initial DL BWP is configured for the first-type UE in the target cell, and if the third initial DL BWP is configured for the second-type UE, such as the eMBB UE, in the target cell, and the bandwidth of the third initial DL BWP is greater than the bandwidth (which is 20M in the FR1 and 100M in the FR2) supported by the first-type UE, such as the Redcap UE, the network device directly determines the fourth initial DL BWP as the first initial DL BWP, and it is indicated to the first-type UE through the BWP configuration information during the cell handover. The first-type UE may perform the random access by using the fourth initial DL BWP when the handover is performed, or may obtain, by decoding the MIB, the fourth initial DL BWP configured by the MIB to perform the random access in the target cell.

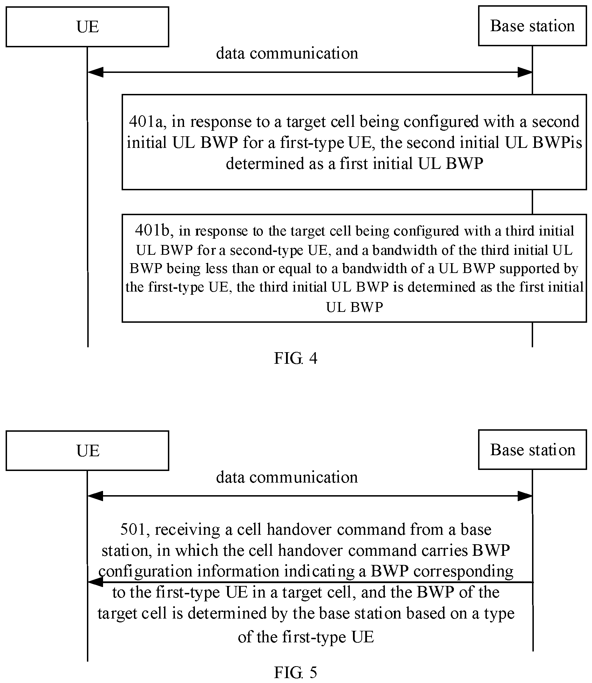

As shown in FIG. 4, a method for information transmission is provided in an embodiment. The method may be performed by a base station in a cellular mobile communication system, and includes at least one of the following steps.

At step 401a, in response to a target cell being configured with a second initial UL BWP for a first-type UE, the second initial UL BWP is determined as a first initial UL BWP.

At step 401b, in response to the target cell being configured with a third initial UL BWP for a second-type UE, and a bandwidth of the third initial UL BWP being less than or equal to a bandwidth of a UL BWP supported by the first-type UE, the third initial UL BWP is determined as the first initial UL BWP.

The step 401a and/or the step 401b may be implemented separately or may be implemented in combination with the step 301a, the step 301b, the step 301c, step the 301d, and/or the step201.

If a specific second initial UL BWP is configured for the first-type UE in the target cell, for example, a specific initial UL BWP (a RedCap-specific initial UL BWP) is configured for a Redcap UE, the network device directly determines the second initial UL BWP as the first initial UL BWP, and it is indicated to the first-type UE through BWP configuration information. The first-type UE may use the second initial UL BWP to perform random access during a handover.

If is a third initial UL BWP is configured for the second-type UE, such as an eMBB UE, in the target cell and a bandwidth of the third initial DL BWP is less than or equal to a bandwidth supported by the first-type UE, such as the Redcap UE, the network device directly determines the third initial UL BWP as the first initial UL BWP, and it is indicated to the first-type UE through the BWP configuration information during a cell handover. The first-type UE may perform the random access using the third initial UL BWP during the cell handover.

As shown in FIG. 5, a method for information transmission is provided in an embodiment. The method may be performed by a UE in a cellular mobile communication system, and includes at least one of the following steps.

At step 501, a cell handover command is received from a base station, in which the cell handover command carries BWP configuration information indicating a BWP corresponding to the first-type UE in a target cell, and the BWP of the target cell is determined by the base station based on a type of the first-type UE.

In a procedure that the UE is handed over from a serving cell to the target cell, the base station to which the serving cell belongs may send a handover command to the UE to instruct the UE to hand over to the target cell. The serving cell and the target cell may be cells generated by a same base station, or cells generated by different base stations. The base station to which the serving cell belongs may perform a resource application and allocation to a base station to which the target cell belongs.

The first-type UE may be a UE in an RRC connected state. A signal receiving capability of the first-type UE is lower than a signal receiving capability of a second-type UE. That is, the first-type UE may have a lower signal receiving capability than that of the second-type UE. For example, the first-type UE has a smaller number of receive antennas than the second-type UE. The first-type UE has a smaller BWP support capability. For example, a bandwidth of a BWP supported by the first-type UE is 20M in an FR1, and 100M in an FR2. A bandwidth of a BWP supported by the second-type UE is greater than the bandwidth of the BWP supported by the first-type UE.

For example, the first-type UE may be a Redcap-type UE introduced in 3GPP Release 17 (R17). The first-type UE may also be an enhanced Redcap-type UE introduced in a subsequent 3GPP Release version. For example, the first-type UE may be a Redcap-type UE. The second-type UE may be an eMBB-type UE.

The BWP of the target cell indicated by the BWP configuration information may be determined by the base station to which the serving cell belongs, or may be determined by the base station to which the target cell belongs. The BWP indicated by the BWP configuration information may include: an initial BWP for accessing the target cell, and/or a first active BWP for service data transmission, and the like.

Here, the BWP indicated by the BWP configuration information may be determined by the base station to which the target cell belongs. The base station may determine a BWP suitable for a type of the UE based on the type of the UE. For example, when a UE performing the handover is the first-type UE, a BWP with a narrower bandwidth may be configured for the first-type UE, so that the configured BWP may conform to a supporting capability of the first-type UE. When the UE performing the handover is the second-type UE, a BWP with a wider bandwidth may be configured for the second-type UE.

In an embodiment, the UE may report its own UE type. When a handover request is sent to the base station to which the target cell belongs, the base station to which the serving cell belongs may carry the type of the UE in the handover request. The base station to which the target cell belongs may configure a BWP for the UE based on the type of the UE. For example, the UE may report its own UE type to the base station to which the serving cell belongs, and the base station to which the serving cell belongs may indicate the type of the UE to the base station to which the target cell belongs in the handover procedure.

After the BWP configured for the first-type UE is determined, the base station to which the target cell belongs may send the BWP to the base station to which the serving cell of the first-type UE belongs. Then the base station to which the serving cell belongs sends the BWP to the UE.

After the BWP configuration information is received, the UE may perform data transmission, for example, reception of a random access response, service data transmission, and the like, based on the BWP of the target cell indicated by the BWP configuration information. Since the BWP is configured based on the type of the UE, the UE may support the BWP.

In this way, the BWP of the target cell being handed over to is configured for the UE based on the type of the UE, thus, a situation that a configured BWP cannot be supported by the UE is reduced, the cell handover success rate is improved, and the communication reliability is improved.

In an embodiment, the BWP for the first-type UE includes at least one of:
a first active initial DL BWP;
a first active initial UL BWP;
a first initial DL BWP; or
a first initial UL BWP.

The first active initial DL BWP may be an active DL BWP initially used when the first-type UE, such as the Redcap UE, performs the service data transmission in the target cell. The bandwidth of the BWP that can be supported by the second-type UE, such as an eMBB UE, is greater than the bandwidth of the BWP that can be supported by the first-type UE. Therefore, a bandwidth of the first active initial DL BWP configured by the base station for the first-type UE is less than or equal to a bandwidth of a first active initial DL BWP configured for the second-type UE, so that the bandwidth of the first active initial DL BWP configured for the first-type UE can conform a support capability of the first-type UE.

The first active initial UL BWP may be an active UL BWP initially used when the first-type UE, such as the Redcap UE, performs the service data transmission in the target cell. The bandwidth of the BWP that can be supported by the second-type UE, such as an eMBB UE, is greater than the bandwidth of the BWP that can be supported by the first-type UE. Therefore, a bandwidth of the first active initial UL BWP configured by the base station for the first-type UE is less than or equal to a bandwidth of a first active initial UL BWP configured for the second-type UE, so that the bandwidth of the first active initial UL BWP configured for the first-type UE can conform the support capability of the first-type UE.

The first initial DL BWP may be a BWP that the first-type LTE performs random access in the target cell. For example, the first initial DL BWP may be a BWP that the first-type UE receives an RAR in the target cell, or the first initial DL BWP may also be a BWP that the first-type UE receives paging in the target cell. For example, the first initial DL BWP may be initialDownlinkBWP-RedCap configured by using DownlinkConfigCommon. The base station may configure the bandwidth of the first initial DL BWP to be less than or equal to a bandwidth of an initial DL BWP configured for the second-type UE, so that the bandwidth of the first initial DL BWP can conform to the support capability of the first-type UE.

For example, the first initial DL BWP may be a RedCap-specific initial DL BWP.

The first initial UL BWP may be a BWP that the first-type LTE performs random access in the target cell. The base station may configure a bandwidth of the first initial UL BWP to be less than or equal to a bandwidth of an initial DL BWP configured for the second-type UE, so that the bandwidth of the first initial UL BWP can conform to the support capability of the first-type UE.

For example, the first initial UL BWP may be a RedCap-specific initial UL BWP.

In this way, the BWP of the target cell being handed over to is configured for the UE based on the type of the UE, thus, a situation that a configured BWP cannot be supported by the UE is reduced, a cell handover success rate is improved, and a communication reliability is improved.

In an embodiment,
the first active initial DL BWP does not include an SSB;
   or,
the first active initial DL BWP includes an SSB.

The first active initial DL BWP configured for the first-type UE may not include an SSB. Here, the SSB may include a CD-SSB or an NCD-SSB. The CD-SSB includes an SIB1, i.e., RMSI, which may be used to indicate one cell. The CD-SSB may be used for synchronization or signal measurement. The NCD-SSB cannot be used to determine a cell and may be used for synchronization or signal measurement.

The first active initial DL BWP configured for the first-type UE may include the SSB. Here, the SSB may include a CD-SSB or an NCD-SSB. The first-type UE may complete synchronization and/or wireless signal measurement based on the SSB in the first active DL BWP. Including an SSB is beneficial for the terminal to complete synchronization and random access as soon as possible during a handover procedure.

The first active initial DL BWP including the SSB may include: the first active initial DL BWP including a CD-SSB, or the first active initial DL BWP including an NCD-SSB.

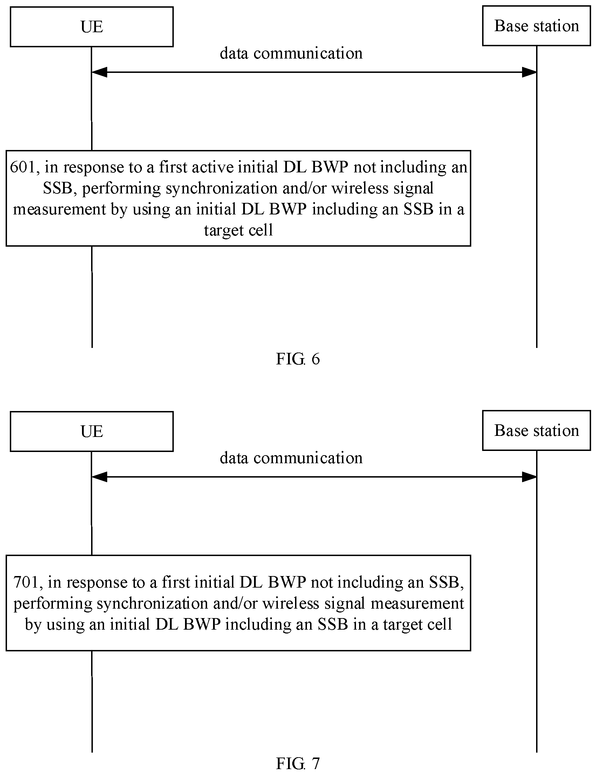

As shown in FIG. 6, a method for information transmission is provided in an embodiment. The method may be performed by a UE in a cellular mobile communication system and includes the following step.

At step 601, in response to a first active initial DL BWP not including an SSB, synchronization and/or wireless signal measurement is performed by using an initial DL BWP including the SSB in a target cell.

The step 601 may be implemented separately or may be implemented in combination with the step 501.

The first active initial DL BWP configured for the first-type UE does not include the SSB, and the first-type UE may use the initial DL BWP including the SSB to perform the synchronization. For example, the first-type UE may obtain, by encoding an MIB, an initial DL BWP configured by the MIB to perform the synchronization and/or wireless signal measurement in the target cell. For example, the synchronization and/or measurement is performed by using a specific initial DL BWP configured by the MIB. Or the first-type UE may perform the synchronization and/or wireless signal measurement by using an initial DL BWP used by the second-type UE.

In an embodiment, in response to determining that the first-type UE has a predetermined capability, the first active initial DL BWP indicated by the BWP configuration information includes an NCD-SSB. Including an NCD-SSB is beneficial for the terminal to complete synchronization and random access as soon as possible during a handover procedure.

The base station may configure the first active initial DL BWP including the NCD-SSB for the first-type UE based on the predetermined capability of the first-type UE.

In an embodiment, the predetermined capability may be obtained by the base station (a target base station) to which the target cell belongs from the base station (an original base station) to which the serving cell belongs. For example, the predetermined capability of the first-type UE may be carried in a handover request sent by the original base station to the target base station. The predetermined capability may be obtained by the base station (the target base station) to which the target cell belongs from a core network. The first-type UE may send its own predetermined capability to the original base station and/or the core network when connected to the original base station.

The predetermined capability may include a requirement of the first-type UE on the first active initial DL BWP. For example, the predetermined capability may be that the first-type UE supports a FG 6-1, but expects that a BWP includes an NCD-SSB and does not include CORESET#0/SIB, and the like.

In an embodiment,
the first initial DL BWP does not include an SSB;
   or,
the first initial DL BWP includes an SSB.

The first initial DL BWP may not include the SSB. Here, the SSB may include a CD-SSB or an NCD-SSB. The CD-SSB includes an SIB1, i.e., RMSI, which may be used to indicate one cell. The CD-SSB may be used for synchronization or for signal measurement. The NCD-SSB cannot be used to determine a cell, and the NCD-SSB may be used for synchronization or signal measurement.

It may be defined that the first initial DL BWP needs to include the SSB, which is beneficial for the terminal to complete synchronization and random access as soon as possible during a handover procedure. Here, the SSB may include a CD-SSB or an NCD-SSB. The first-type UE may complete synchronization and/or wireless signal measurement based on the SSB included in the first initial DL BWP.

The first initial DL BWP including the SSB may include: the first initial DL BWP including the CD-SSB, or the first initial DL BWP including the NCD-SSB.

As shown in FIG. 7, a method for information transmission is provided in an embodiment. The method may be performed by a UE in a cellular mobile communication system and includes the following step.

At step 701, in response to a first initial DL BWP not including an SSB, synchronization and/or wireless signal measurement is performed by using an initial DL BWP including the SSB in a target cell.

The step 701 may be implemented separately or may be implemented in combination with the step 501 and/or the step 601.

The first initial DL BWP does not include the SSB, and the first-type UE may use the initial DL BWP including the SSB to perform the synchronization. For example, the first-type UE may obtain, by encoding an MIB, an initial DL BWP configured by the MIB to perform the synchronization in the target cell. For example, the synchronization is performed by using a specific initial DL BWP configured by the MIB, or the first-type UE may perform the synchronization and/or wireless signal measurement by using an initial DL BWP used by the second-type UE.

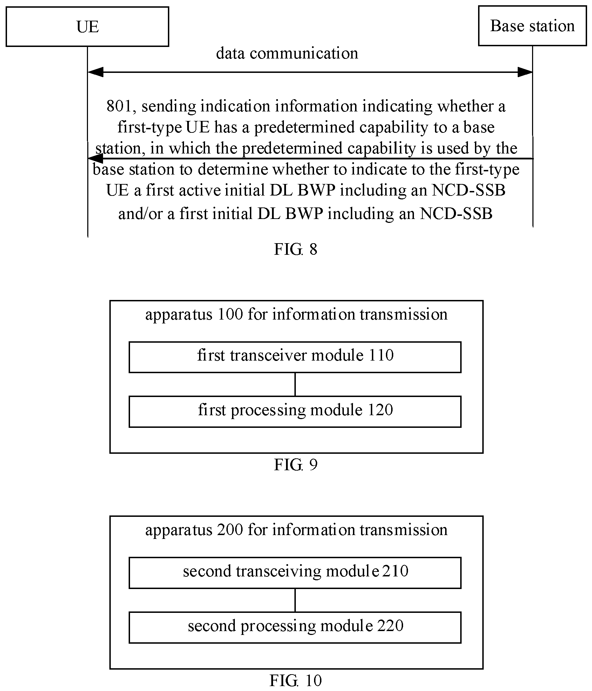

As shown in FIG. 8, a method for information transmission is provided in an embodiment. The method may be performed by a UE in a cellular mobile communication system and includes the following step.

At step 801, indication information indicating whether a first-type UE has a predetermined capability is sent to a base station, in which the predetermined capability is used by the base station to determine whether to indicate to the first-type UE a first active initial DL BWP including an NCD-SSB and/or a first initial DL BWP including an NCD-SSB.

The step 801 may be implemented separately or may be implemented in combination with the step 501 and/or the step 601 and/or the step 701.

In an embodiment, the predetermined capability may be obtained by the base station (a target base station) to which the target cell belongs from the base station (an original base station) to which the serving cell belongs. For example, the predetermined capability of the first-type UE may be carried in a handover request sent by the original base station to the target base station. The predetermined capability may be obtained by the base station (the target base station) to which the target cell belongs from a core network. The first-type UE may send its own predetermined capability to the original base station and/or the core network when connected to the original base station.

The predetermined capability may include a requirement of the first-type UE on the first active initial DL BWP and/or the first initial DL. For example, the predetermined capability may be that the first-type UE supports a FG 6-1, but expects that a BWP includes an NCD-SSB and does not include a CORESET#0/SIB, and the like.

A specific example is provided below in conjunction with any of the above embodiments.
1. A method for configuring an initial BWP for a specific-type terminal during a handover.
   a) The specific-type terminal is a Redcap-type terminal introduced in R17.
   b) The specific-type terminal is an enhanced Redcap-type terminal introduced in a subsequent version.
   c) A target base station obtains from a handover request that a type of a user equipment is the specific-type terminal.
2. It is agreed that for a user equipment of a specific-type terminal in a connected state, a first active initial DL BWP specified during the handover may not need to include an SSB (a CD-SSB or an NCD-SSB).
   a) If a network device renders the first active initial DL BWP being included in a handover command, the first initial DL BWP may not be configured with the CD-SSB or the NCD-SSB.
   The terminal may perform synchronization by using an initial DL BWP including the SSB, for example, an initial DL BWP configured by an MIB, or an initial DL BWP used by a normal user.
3. It is agreed that for the user equipment of the specific-type terminal in the connected state, the first active initial DL BWP specified during the handover needs to include the SSB (the CD-SSB or the NCD-SSB).
   a) If the network device renders the first active initial DL BWP being included in the handover command, the CD-SSB or the NCD-SSB needs to be configured for the first active initial DL BWP (i.e., if the first active initial DL BWP does not include the CD-SSB, the NCD-SSB needs to be additionally configured).
   b) Further, the NCD-SSB may be configured for the first active initial DL BWP specified for the specific-type terminal during the handover, which needs to be based on a capability of the terminal obtained by a base station.

In an embodiment, the capability of the terminal may be obtained by the target base station from an original base station (for example, the capability of the terminal carried in the handover request) or from a core network.

The capability of the terminal (RedCap UE) may be that a terminal supports an FG 6-1, but expects that the BWP includes the NCD-SSB, but does not include a CORESET#0/SIB.

4. It is agreed that for the user equipment of the specific-type terminal in the connected state, an initial DL BWP specified during the handover is that a specific initial DL BWP (i.e., initialDownlinkBWP-RedCap in DownlinkConfigCommon, which is different from the above first active initial DL BWP) configured for the specific-type terminal may not need to include the CD-SSB.
a) If the target cell is configured with a specific initial DL BWP configured for the specific-type terminal, the network device directly configures the specific initial DL BWP for the specific-type terminal. The terminal performs random access by using the specific initial BWP when a handover is performed.

In this case, the specific initial DL BWP configured for the specific-type terminal does not necessarily include the SSB, and the terminal needs to use another initial BWP (for example, an initial BWP for a normal user) for synchronization and measurement.

Further, the NCD-SSB is configured for the specific initial DL BWP for the specific-type terminal. In this case, the synchronization and the measurement in the handover procedure may be accelerated and performance is optimized in a case, for example, without the SSB.

Further, the NCD-SSB is configured for the specific initial DL BWP for the specific-type terminal, which needs to be based on the capability of the terminal, for example, the terminal supporting a configuration of the NCD-SSB. For example, the capability of the terminal (a RedCap UE) may be that the terminal supports the FG 6-1, but expects that the BWP includes the NCD-SSB, but does not include a CORESET#0/SIB.

In this case, if the specific initial DL BWP for the specific-type terminal does not include the SSB, the terminal performs the synchronization and measurement during the random access by using an initial BWP including the SSB, such as the initial DL BWP configured by the MIB or the initial DL BWP used by the normal user.
5. It is agreed that for the user equipment of the specific-type terminal in the connected state, the initial DL BWP (i.e., initialDownlinkBWP in the DownlinkConfigCommon) specified in the handover needs to include the SSB (the CD-SSB). A purpose of this is to ensure that the terminal can synchronize and complete random access as soon as possible in the handover procedure.
   a) If the target cell is configured with the initial DL BWP configured for the normal user, and a bandwidth of the initial DL BWP is not greater than a bandwidth (which is 20M in an FR1 and 100M in an FR2) supported by a Redcap user, the network device directly configures the initial DL BWP used by the normal user to the specific-type terminal as the initial DL BWP specified when the handover is performed. The terminal may perform the random access by using the initial DL BWP when the handover is performed.
   b) If the target cell is configured with the initial DL BWP configured for the normal user, and the bandwidth of the initial DL BWP is greater than the bandwidth (which is 20M in an FR1 and 100M in an FR2) supported by the Redcap user, the network device directly configures the initial DL BWP configured by the MIB to the specific-type terminal as the initial DL BWP specified when the handover is performed. The terminal may perform the random access by using the initial DL BWP when the handover is performed.
   c) If the target cell is not configured with the initial DL BWP configured for the normal user, the network device directly configures the initial DL BWP configured by the MIB to the specific-type terminal as the initial DL BWP specified when the handover is performed. The terminal may perform the random access by using the initial DL BWP when the handover is performed.
6. It is agreed that for the user equipment of the specific-type terminal in the connected state, the initial UL BWP specified during the handover is a specific initial UL BWP (a RedCap-specific initial UL BWP configuration) for the specific-type terminal.
   a) In an embodiment, if the target base station does not configure with the specific initial DL BWP configured for the specific-type terminal, the initial UL BWP configured for the normal user is used. In this case, the target base station supports Redcap, the target base station either configures the specific initial DL BWP for the specific-type terminal, or configures the initial UL BWP having a bandwidth within a bandwidth range supported by the Redcap user for the normal user.

An apparatus for information transmission is further provided in an embodiment of the disclosure. As shown in FIG. 9, the apparatus 100 is applied to a base station in cellular mobile wireless communication, and includes:
a first transceiver module 110, configured to send a cell handover command to a first-type UE, in which the cell handover command carries BWP configuration information indicating a BWP of a target cell, and the BWP of the target cell is determined based on a type of the first-type UE.

In an embodiment, the BWP corresponding to the first-type UE indicated by the BWP configuration information includes at least one of:
a first active initial DL BWP;
a first active initial UL BWP;
a first initial DL BWP; or
a first initial UL BWP.

In an embodiment, the first active initial DL BWP does not include an SSB;
or,
the first active initial DL BWP includes an SSB.

In an embodiment, in response to determining that the first-type UE has a predetermined capability, the first active initial DL BWP indicated by the BWP configuration information includes an NCD-SSB.

In an embodiment, the first initial DL BWP does not include an SSB;
or,
the first initial DL BWP includes an SSB.

In an embodiment, in response to determining that the first-type UE has the predetermined capability, the first initial DL BWP indicated by the BWP configuration information includes an NCD-SSB.

In an embodiment, the apparatus further includes a first processing module 120, and the first processing module 120 is configured to perform at least one of:
in response to the target cell being configured with a second initial DL BWP for the first-type UE, determining the second initial DL BWP as the first initial DL BWP;
in response to the target cell being configured with a third initial DL BWP for a second-type UE, and a bandwidth of the third initial DL BWP being less than or equal to a bandwidth of a DL BWP supported by the first-type UE, determining the third initial DL BWP as the first initial DL BWP;
in response to the target cell being configured with the third initial DL BWP for the second-type UE, and the bandwidth of the third initial DL BWP being greater than the bandwidth of the DL BWP supported by the first-type UE, determining a fourth initial DL BWP configured in an MIB corresponding to the target cell as the first initial DL BWP; or
in response to the target cell being not configured with the third initial DL BWP for the second-type UE, determining a fifth initial DL BWP configured in the MIB corresponding to the target cell as the first initial DL BWP.

In an embodiment, the apparatus further includes a first processing module 120, and the first processing module 120 is configured to perform at least one of:
in response to the target cell being configured with a second initial UL BWP for the first-type UE, determining the second initial UL BWP as the first initial UL BWP; or
in response to the target cell being configured with a third initial UL BWP for the second-type UE, and a bandwidth of the third initial UL BWP being less than or equal to a bandwidth of an UL BWP supported by the first-type UE, determining the third initial UL BWP as the first initial UL BWP.

An apparatus for information transmission is further provided in an embodiment of the disclosure. As shown in FIG. 10, the apparatus 200 is applied to a UE in cellular mobile wireless communication, and includes:
a second transceiving module 210, configured to receive a cell handover command from a base station, in which the cell handover command carries BWP configuration information indicating a BWP corresponding to a first-type user equipment (UE) in a target cell, and the BWP of the target cell is determined by the base station based on a type of the first-type UE.

In an embodiment, the BWP for the first-type UE includes at least one of:
a first active initial DL BWP;
a first active initial UL BWP;
a first initial DL BWP; or
a first initial UL BWP.

In an embodiment, the first active initial DL BWP does not include an SSB;
or,
the first active initial DL BWP includes an SSB.

In an embodiment, the apparatus further includes a second processing module 220, and the second processing module 220 is configured to:
in response to a first active initial DL BWP not including an SSB, perform synchronization and/or wireless signal measurement by using an initial DL BWP including the SSB in a target cell.

In an embodiment, the first initial DL BWP does not include an SSB;
or,
the first initial DL BWP includes an SSB.

In an embodiment, the apparatus further includes a second processing module 220, and the second processing module 220 is configured to:
in response to the first initial DL BWP not including an SSB, perform synchronization and/or wireless signal measurement by using an initial DL BWP including the SSB in the target cell.

In an embodiment, the second transceiving module 210 is further configured to:
send, to the base station, indication information indicating whether the first-type UE has a predetermined capability, in which the predetermined capability is used for the base station to determine whether to indicate to the first-type UE a first active initial DL BWP including an NCD-SSB and/or a first initial DL BWP including an NCD-SSB.

In an embodiment, the first transceiving module 110, the first processing module 120, the second transceiving module 210, the second processing module 220, and the like may be implemented by one or more central processing units (CPUs), graphics processing units (GPUs), baseband processors (BPs), application specific integrated circuits (ASICs), digital signal processing (DSP), programmable logic devices (PLDs), complex programmable logic devices (CPLDs), field-programmable gate arrays (FPGAs), general purpose processors, controllers, micro controller units (MCUs), microprocessors or other electronic components, to implement the aforementioned methods.

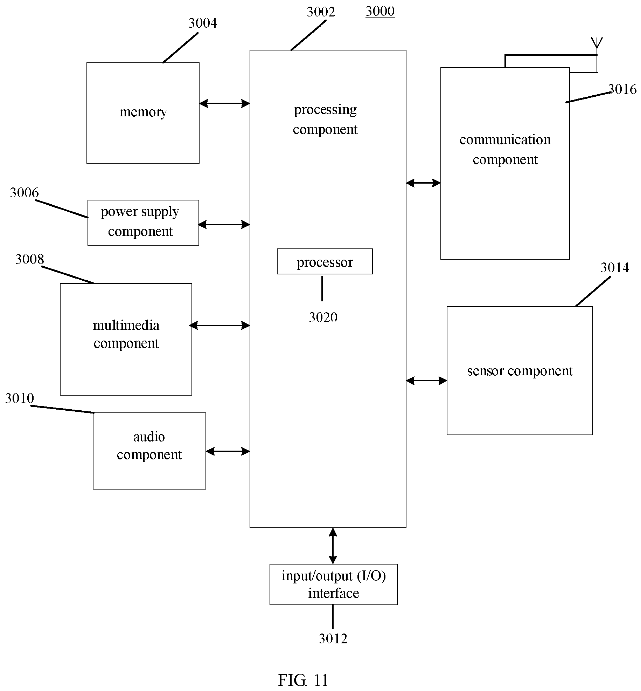

FIG. 11 is a block diagram of a device 3000 for information transmission according to an embodiment. For example, the device 3000 may be a mobile phone, a computer, a digital broadcasting terminal, a messaging device, a game console, a tablet device, a medical equipment, a fitness equipment, a personal digital assistant, and the like.

Referring to FIG. 11, the device 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the whole operation of the device 3000, such as the operations related to display, phone call, data communication, camera operation and recording operation. The processing component 3002 may include one or more processors 3020 to perform instructions, to complete all or part of steps of the above method. In addition, the processing component 3002 may include one or more modules to facilitate interaction between the processing component 3002 and other components. For example, the processing component 3002 may include a multimedia module to facilitate interaction between the multimedia component 3008 and the processing component 3002.

The memory 3004 is configured to store all types of data to support the operation of the device 3000. Examples of the data include the instructions of any applications or methods operated on the device 3000, contact data, phone book data, messages, pictures, videos, etc. The memory 3004 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 3006 may provide power supply for all components of the device 3000. The power supply component 3006 may include power supply management system, one or more power supplies, and other units related to generating, managing and distributing power for the device 3000.

The multimedia component 3008 includes an output interface screen provided between the device 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 3008 includes a front camera and/or a rear camera. When the device 3000 is in operation mode, such as shooting mode or video mode, the front camera or the rear camera may receive the external multimedia data. Each front camera and rear camera may be a fixed optical lens system or an optical lens system with focal length and optical zoom capacity.

The audio component 3010 is configured as an output and/or input signal. For example, the audio component 3010 includes a microphone (MIC). When the device 3000 is in operation mode, such as call mode, record mode, and speech recognition mode, the microphone is configured to receive the external audio signals. The audio signals received may be further stored in the memory 3004 or sent via the communication component 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the device 3000. For example, the sensor component 3014 may detect the on/off state of the device 3000 and the relative positioning of the component. For example, the component is a display and a keypad of the device 3000. The sensor component 3014 may further detect the location change of the device 3000 or one component of the device 3000, the presence or absence of contact between the user and the device 3000, the orientation or acceleration/deceleration of the device 3000, and the temperature change of the device 3000. The sensor component 3014 may include a proximity sensor, which is configured to detect the existence of the objects nearby without any physical contact. The sensor component 3014 may further include a light sensor such as CMOS or CCD image sensor, which is configured to use in imaging applications. In some embodiments, the sensor component 3014 may further include an acceleration transducer, a gyroscope sensor, a magnetic sensor, a pressure sensor or a temperature sensor.

The communication component 3016 is configured for the convenience of wire or wireless communication between the device 3000 and other devices. The device 3000 may access wireless networks based on communication standard, such as Wi-Fi, 2G or 3G, or their combination. In an embodiment, the communication component 3016 receives a broadcast signal or broadcast related information from an external broadcast management system through a broadcast channel. In an exemplary embodiment, the communication component 3016 further includes a near field communication (NFC) module to facilitate short-range communication. For example, an NFC module may be implemented based on radio frequency identification (RFID) technology, infrared data association (IRDA) technology, ultra-wideband (UWB) technology, Bluetooth (BT) technology and other technologies.

In an exemplary embodiment, the device 3000 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-temporary computer readable storage medium is further provided which includes instructions, such as the memory 3004 including instructions. The instructions may be executed by a processor 3020 of the device 3000 to complete the above methods. For example, the non-transitory computer readable storage medium may be a ROM, a random access memory (RAM), a CD-ROM, a magnetic tape, a floppy disk, an optical data storage device, etc.

After considering the specification and practicing the disclosure herein, those skilled in the art will easily think in an embodiment of other implementations. The present application is intended to cover any variations, usages, or adaptive changes of the present disclosure. These variations, usages, in an embodiment or adaptive changes follow the general principles of the present disclosure and include common knowledge or conventional technical means in the technical field in an embodiment not disclosed by the present disclosure. The description and the embodiments are to be regarded as exemplary only, and in an embodiment the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for information transmission, performed by a base station, comprising:
sending a cell handover command to a first-type user equipment (UE), wherein the cell handover command carries bandwidth part (BWP) configuration information indicating a BWP of a target cell, and the BWP of the target cell is determined based on a type of the first-type UE.

2. The method of claim 1, wherein the BWP corresponding to the first-type UE indicated by the BWP configuration information comprises at least one of:
a first active initial downlink (DL) BWP;
a first active initial uplink (UL) BWP;
a first initial DL BWP; or
a first initial UL BWP.

3. The method of claim 2, wherein
the first active initial DL BWP does not comprise a synchronization signal block (SSB); or,
the first active initial DL BWP comprises an SSB.

4. The method of claim 3, wherein
in response to determining that the first-type UE has a predetermined capability, the first active initial DL BWP indicated by the BWP configuration information comprises a non-cell-defining SSB (NCD-SSB).

5. The method of claim 2, wherein
the first initial DL BWP does not comprise an SSB;
or,
the first initial DL BWP comprises an SSB.

6. The method of claim 5, wherein
in response to determining that the first-type UE has a predetermined capability, the first initial DL BWP indicated by the BWP configuration information comprises an NCD-SSB.

7. The method of claim 2, further comprising at least one of:
in response to the target cell being configured with a second initial DL BWP for the first-type UE, determining the second initial DL BWP as the first initial DL BWP;
in response to the target cell being configured with a third initial DL BWP for a second-type UE, and a bandwidth of the third initial DL BWP being less than or equal to a bandwidth of a DL BWP supported by the first-type UE, determining the third initial DL BWP as the first initial DL BWP;
in response to the target cell being configured with the third initial DL BWP for the second-type UE, and the bandwidth of the third initial DL BWP being greater than the bandwidth of the DL BWP supported by the first-type UE, determining a fourth initial DL BWP configured in a master information block (MIB) corresponding to the target cell as the first initial DL BWP; or
in response to the target cell being not configured with the third initial DL BWP for the second-type UE, determining a fifth initial DL BWP configured in the MIB corresponding to the target cell as the first initial DL BWP.

8. The method of claim 2, further comprising at least one of:
in response to the target cell being configured with a second initial UL BWP for the first-type UE, determining the second initial UL BWP as the first initial UL BWP; or
in response to the target cell being configured with a third initial UL BWP for a second-type UE, and a bandwidth of the third initial UL BWP being less than or equal to a bandwidth of a UL BWP supported by the first-type UE, determining the third initial UL BWP as the first initial UL BWP.

9. A method for information transmission, performed by a first-type user equipment (UE), comprising:
receiving a cell handover command from a base station, wherein the cell handover command carries bandwidth part (BWP) configuration information indicating a BWP corresponding to the first-type UE in a target cell, and the BWP of the target cell is determined by the base station based on a type of the first-type UE.

10. The method of claim 9, wherein
the BWP corresponding to the first-type UE comprises at least one of:
a first active initial downlink (DL) BWP;
a first active initial uplink (UL) BWP;
a first initial DL BWP; or
a first initial UL BWP.

11. The method of claim 10, wherein,
the first active initial DL BWP does not comprise a synchronization signal block (SSB);
or,
the first active initial DL BWP comprises an SSB.

12. The method of claim 11, further comprising:
in response to the first active initial DL BWP not comprising an SSB, performing synchronization and/or wireless signal measurement by using an initial DL BWP comprising the SSB in the target cell.

13. The method of claim 10, wherein,
the first initial DL BWP does not comprise an SSB;
or,
the first initial DL BWP comprises an SSB.

14. The method of claim 13, further comprising:
in response to the first initial DL BWP not comprising an SSB, performing synchronization and/or wireless signal measurement by using an initial DL BWP comprising the SSB in the target cell.

15. The method of claim 10, further comprising:
sending indication information indicating whether the first-type UE has a predetermined capability to the base station, wherein the predetermined capability is used for the base station to determine whether to indicate to the first-type UE a first active initial DL BWP comprising a non-cell-defining SSB (NCD-SSB) and/or a first initial DL BWP comprising an NCD-SSB.

16. An apparatus for information transmission, comprising:
a first transceiving module, configured to send a handover command to a first-type user equipment (UE), wherein the cell handover command carries bandwidth part (BWP) configuration information indicating a BWP of a target cell, and the BWP of the target cell is determined based on a type of the first-type UE.

17. The apparatus of claim 16, wherein
the BWP corresponding to the first-type UE indicated by the BWP configuration information comprises at least one of:
a first active initial downlink (DL) BWP;
a first active initial uplink (UL) BWP;
a first initial DL BWP; or
a first initial UL BWP.

18. The apparatus of claim 17, wherein
the first active initial DL BWP does not comprise a synchronization signal block (SSB);
or,
the first active initial DL BWP comprises an SSB.

19. The apparatus of claim 18, wherein
in response to determining that the first-type UE has a predetermined capability, the first active initial DL BWP indicated by the BWP configuration information comprises a non-cell-defining SSB (NCD-SSB).

20. The apparatus of claim 17, wherein
the first initial DL BWP does not comprise an SSB;
or,
the first initial DL BWP comprises an SSB.

21. The apparatus of claim 20, wherein
in response to determining that the first-type UE has a predetermined capability, the first initial DL BWP indicated by the BWP configuration information comprises a non-cell-defining SSB (NCD-SSB).

22. The apparatus of claim 17, further comprising a first processing module, wherein the first processing module is configured to perform at least one of:
in response to the target cell being configured with a second initial DL BWP for the first-type UE, determining the second initial DL BWP as the first initial DL BWP;
in response to the target cell being configured with a third initial DL BWP for a second-type UE, and a bandwidth of the third initial DL BWP being less than or equal to a bandwidth of a DL BWP supported by the first-type UE, determining the third initial DL BWP as the first initial DL BWP;
in response to the target cell being configured with the third initial DL BWP for the second-type UE, and the bandwidth of the third initial DL BWP being greater than the bandwidth of the DL BWP supported by the first-type UE, determining a fourth initial DL BWP configured in a master information block (MIB) corresponding to the target cell as the first initial DL BWP; or
in response to the target cell being not configured with the third initial DL BWP for the second-type UE, determining a fifth initial DL BWP configured in the MIB corresponding to the target cell as the first initial DL BWP.

23. The apparatus of claim 17, further comprising a first processing module, wherein the first processing module is configured to perform at least one of:
in response to the target cell being configured with a second initial UL BWP for the first-type UE, determining the second initial UL BWP as the first initial UL BWP; or
in response to the target cell being configured with a third initial UL BWP for a second-type UE, and a bandwidth of the third initial UL BWP being less than or equal to a bandwidth of a UL BWP supported by the first-type UE, determining the third initial UL BWP as the first initial UL BWP.

24. An apparatus for information transmission, comprising:
a second transceiving module, configured to receive a cell handover command from a base station, wherein the cell handover command carries bandwidth part (BWP) configuration information indicating a BWP corresponding to a first-type user equipment (UE) in a target cell, and the BWP of the target cell is determined by the base station based on a type of the first-type UE.

25. The apparatus of claim 24, wherein,
the BWP corresponding to the first-type UE comprises at least one of:
a first active initial downlink (DL) BWP;
a first active initial uplink (UL) BWP;
a first initial DL BWP; or
a first initial UL BWP.

26. The apparatus of claim 25, wherein,
the first active initial DL BWP does not comprise a synchronization signal block (SSB);
or,
the first active initial DL BWP comprises an SSB.

27. The apparatus of claim 26, further comprising a second processing module, wherein the second processing module is configured to perform:
in response to the first active initial DL BWP not comprising an SSB, perform synchronization and/or wireless signal measurement by using an initial DL BWP comprising the SSB in the target cell.

28. The apparatus of claim 25, wherein,
the first initial DL BWP does not comprise an SSB;
or,
the first initial DL BWP comprises an SSB.

29. The apparatus of claim 28, further comprising a second processing module, wherein the second processing module is configured to:
in response to the first initial DL BWP not comprising an SSB, perform synchronization and/or wireless signal measurement by using an initial DL BWP comprising the SSB in the target cell.

30. The apparatus of claim 25, wherein the second transceiving module is further configured to:
send indication information indicating whether the first-type UE has a predetermined capability to the base station, wherein the predetermined capability is used for the base station to determine whether to indicate to the first-type UE a first active initial DL BWP comprising a non-cell-defining SSB (NCD-SSB) and/or a first initial DL BWP comprising an NCD-SSB.

31. A communication device, comprising a processor, a memory and an executable program stored in the memory and capable of being executed by the processor, wherein when the processor executes the executable program, steps of the method for information transmission according to any one of claims 1 to 8 or any one of claims 9 to 15 are performed.

32. A storage medium with an executable program stored thereon, wherein when the executable program is executed by a processor, steps of the method for information transmission described in any one of claims 1 to 8 or claims 9 to 15 are performed.
